# EUROPÄISCHE PATENTSCHRIFT

(11) **EP 2 527 222 B1**
(45) Veröffentlichungstag und Bekanntmachung des Hinweises auf die Patenterteilung: **16.05.2018**
(21) Anmeldenummer: 12001661.3
(22) Anmeldetag: 10.03.2012
(51) Int. Cl.: B60W 30/14, B60W 30/18, B60K 31/00

(54) **Verfahren zum Betrieb eines längsführenden Fahrerassistenzsystems und Kraftfahrzeug**
Method for operating a longitudinally guiding driver assistance system and motor vehicle
Procédé destiné au fonctionnement d'un système d'assistance du conducteur longitudinal et véhicule automobile

(30) Priorität: 25.05.2011 DE 102011102435
(43) Veröffentlichungstag der Anmeldung: 28.11.2012
(73) Patentinhaber: Audi AG, 85045 Ingolstadt (DE)
(72) Erfinder: Schuberth, Stefan, 85057 Ingolstadt (DE); Held, Ralf, 85072 Eichstätt (DE)
(74) Vertreter: Thielmann, Frank

(56) Entgegenhaltungen:
- EP-A2- 2 085 280
- WO-A1-03/104014
- WO-A1-2010/139383
- WO-A2-2007/024371
- DE-A1- 10 258 167
- US-A1- 2009 037 062

## Beschreibung

Die Erfindung betrifft ein Verfahren zum Betrieb eines längsführenden Fahrerassistenzsystems eines Kraftfahrzeugs, wobei abhängig von wenigstens einem Regeldatum die Geschwindigkeit des Kraftfahrzeugs geregelt wird, wobei als weitere Regeldaten Kurvendaten bezüglich wenigstens einer als nächstes durch das Kraftfahrzeug zu durchfahrenden Kurve bei der Regelung berücksichtigt werden und wobei unter Berücksichtigung der Kurvendaten eine Komfortkurvengeschwindigkeit ermittelt wird.

Längsführende Fahrerassistenzsysteme sind im Stand der Technik bereits weithin bekannt. Derartige Fahrerassistenzsysteme regeln den Betrieb des Kraftfahrzeugs durch automatische Brems- oder Beschleunigungseingriffe zumindest teilweise automatisch. Das einfachste Beispiel für ein derartiges längsführendes Fahrerassistenzsystems ist die sogenannte Geschwindigkeitsregelanlage (GRA), oft auch Tempomat genannt. Dabei kann fahrerseitig eine Wunschgeschwindigkeit eingestellt werden, die dann automatisch durch das Fahrerassistenzsystem möglichst genau eingehalten wird.

Erweitert wird diese Idee durch längsführende Fahrerassistenzsysteme, die einen sogenannten Folgeregler aufweisen, und häufig auch als ACC-Systeme (adaptive cruise control) bezeichnet werden. Dabei wird nur auf die Wunschgeschwindigkeit des Fahrers geregelt, wenn nicht ein voranfahrendes Fahrzeug detektiert wurde. Liegt ein voranfahrendes Fahrzeug vor, insbesondere selbstverständlich eines, das langsamer als die Wunschgeschwindigkeit fährt, so wird automatisch beispielsweise auf eine Zeitlücke zu dem voranfahrenden Fahrzeug geregelt, bis dieses wieder verschwunden ist und wieder auf die Wunschgeschwindigkeit geregelt werden kann. Häufig wird der Folgemodus eines solchen ACC-Systems durch ein entsprechendes hinterleuchtetes Symbol dem Fahrer zur Kenntnis gebracht.

Heute bekannte ACC-Systeme können in Folgefahrt hinter einem voranfahrenden Fahrzeug auch kurvige Strecken gegebenenfalls ohne einen Fahrereingriff bewältigen. Nähert man sich einer Kurve mit einer zu hohen Geschwindigkeit, so wird man in der Regel vom vorausfahrenden Fahrzeug vor der Kurve abgebremst, da dieses ebenfalls für die Kurve deutlich zu schnell ist und manuell abbremsen muss. Ist der Kurvenradius sehr klein, so kann zwar das ACC-Regelobjekt, also das voranfahrende Fahrzeug, aus dem Detektionsbereich der Sensoren herausfahren und nicht mehr vom System berücksichtigt werden, doch hat sich in dieser Situation meist eine genügend große Querbeschleunigung aufgebaut, so dass auf der Basis der Querbeschleunigung auch auf die Kurvenkrümmung geregelt werden kann. Dies ist möglich, nachdem vorgesehen ist, die maximal mögliche Geschwindigkeit des Kraftfahrzeugs aufgrund der Querbeschleunigung zu beschränken.

Wird jedoch das ACC-Regelobjekt, das bedeutet das voranfahrende Fahrzeug, bereits vor dem Kurveneingang verloren, ohne eine geeignete Querbeschleunigung aufgebaut zu haben, so würde das ACC-System vor der Kurve beschleunigen und ein Fahrereingriff wäre notwendig. Fährt man in Freifahrt oder nur mit einer Geschwindigkeitsregelanlage auf die Kurve zu, so ist ebenfalls ein Eingriff notwendig.

DE 102 58 167 A1 offenbart ein Verfahren für ein Fahrzeug, in dem nach Feststellung einer Kurve vor dem Kraftfahrzeug eine im Wesentlichen momentane Geschwindigkeit des Fahrzeugs mit einem Geschwindigkeitslimit für die Kurve verglichen wird und die Geschwindigkeit des Fahrzeugs auf das Geschwindigkeitslimit reduziert wird. Dies soll bei einem adaptiven Tempomaten realisiert werden. Das Geschwindigkeitslimit kann dabei von den Komfortvorlieben des Fahrers abhängen.

Eine Vorrichtung und ein Verfahren zur Kurvenvorwarnung sind DE 10 2006 028 277 A1 zu entnehmen. Nach einer Ermittlung der aktuellen Position kann eine Krümmung der Strecke auf Basis von Kartendaten ermittelt werden, woraus eine Kurvensollgeschwindigkeit abgeleitet und angezeigt werden kann.

WO 2010/139 383 A1 betrifft ein Verfahren und eine Vorrichtung zur Kurvengeschwindigkeitsregelung eines Fahrzeugs. Dabei wird das Problem diskutiert, dass digitale Kartendaten, aus denen eine Kurve erkannt wird, nie aktuell sind. Mithin wird vorgeschlagen, aus digitalen Kartendaten einen vom vorausliegenden Streckenabschnitt abhängigen Höchstgeschwindigkeitsverlauf zu ermitteln und dass eine Begrenzung der Geschwindigkeit des Fahrzeugs abhängig vom ermittelten Höchstgeschwindigkeitsverlauf nur derart vorgenommen wird, dass eine Grenzgeschwindigkeit nicht unterschritten wird, selbst wenn diese größer als eine Geschwindigkeit des Höchstgeschwindigkeitsverlaufs ist. So sollen die Auswirkungen von Fehlern in digitalen Kartendaten auf die Regelung des Fahrzeugs minimiert werden.

EP 2 085 280 A2 offenbart eine Bewegungssteuerungseinrichtung für ein Fahrzeug, bei der eine geeignete Fahrzeuggeschwindigkeit für eine Kurve ermittelt wird und eine entsprechende Geschwindigkeitsreduzierung stattfinden soll. Es ist zusätzlich eine Gradientenermittlungseinrichtung zur Ermittlung eines Gradienten der Kurve vorgesehen, wobei die geeignete Fahrzeuggeschwindigkeit zusätzlich auf Basis des Gradienten der Straße ermittelt wird.

US 2009/0 037 062 A1) offenbart ein Kurvengeschwindigkeitssteuersystem mit adaptiver Kartenvorausschauzeit und Fahrmodusauswahl. Es werden Kurvenpunkte und zugehörige Geschwindigkeitsprofile ermittelt. Über die Auswahl der Zahl der Kurvenpunkte kann der Fahrer wählen, wie aggressiv das System das Kraftfahrzeug abbremst.

WO 2007/024 371 A2 betrifft ein Verfahren zur Fahrassistenz beim Abfahren einer Straße. Dabei wird aus einer Karte eine Kurve identifiziert, eine erwartete Geschwindigkeit für die Kurve berechnet, der Fahrer über die bevorstehende Kurve informiert, der Fahrer gewarnt, wenn er die Kurve bei zu hoher Geschwindigkeit nehmen möchte und das Fahrzeug gesteuert, um die Kurve sicher zu fahren. Bei einer im Voraus bestimmten Kurve können die ermittelten geeigneten Geschwindigkeiten gespeichert werden.

WO 03/104 014 A1 betrifft ein Verfahren und eine Vorrichtung zur Begrenzung der Kurvengeschwindigkeit eines Fahrzeugs auf eine Grenzgeschwindigkeit. Dabei ist die Ermittlung der Grenzgeschwindigkeit aus einer den Kurvenradius beschreibenden Größe durch den Fahrer beeinflussbar.
Der Erfindung liegt daher die Aufgabe zugrunde, ein Betriebsverfahren für ein längsführendes Fahrerassistenzsystem anzugeben, mit welchem auch ohne ein selbst abbremsendes ACC-Regelobjekt ein Durchfahren von Kurven ohne Eingriff des Fahrers möglich ist.

Zur Lösung dieser Aufgabe sind bei einem Verfahren der eingangs genannten Art erfindungsgemäß die Merkmale des Anspruchs 1 vorgesehen.

Die Erfindung schlägt also vor, Daten über den zukünftigen Straßenverlauf, mithin auch Kurvendaten, zu verwenden, um auf eine kommende Kurve eine Geschwindigkeitsanpassung zu realisieren, wodurch kein Fahrereingriff in der Längsdynamik des Kraftfahrzeugs notwendig ist. Auf diese Weise wird die Akzeptanz und die Zufriedenheit der Benutzer für längsführende Fahrerassistenzsysteme, insbesondere Geschwindigkeitsregelanlagen und ACC-Systeme, erhöht. Das längsführende Fahrerassistenzsystem ist also selbsttätig in der Lage, aktiv auf Kurven zu bremsen und es tritt keine Beschleunigung auf Kurven mehr auf, wenn in Freifahrt gefahren wird oder das ACC-Regelobjekt verloren wurde. Es ist für einen Fahrer also möglich, eine kurvige Straße zu befahren, ohne dass Bremseingriffe oder sonstige Eingriffe in die Längsdynamik des Kraftfahrzeugs notwendig sind.

Dabei sei an dieser Stelle noch angemerkt, dass selbstverständlich die Durchführung des erfindungsgemäßen Verfahrens vollständig automatisch abläuft, beispielsweise innerhalb einer speziell hierzu ausgebildeten Steuereinrichtung des Fahrerassistenzsystems.

Dabei kann vorgesehen sein, dass die Kurvendaten aus Straßenverlaufsdaten einer Navigationseinrichtung und/oder aus von wenigstens einem vorausschauenden Umfeldsensor ermittelten Umfelddaten ermittelt werden. Es wird also beispielsweise der in einem Navigationssystem gespeicherte Straßenverlauf betrachtet und auf Kurven hin untersucht. Die aktuelle Position des Kraftfahrzeugs kann dabei beispielsweise mittels eines Positionssensors, insbesondere eines GPS-Sensors, ermittelt werden. Möglich ist es jedoch auch, Daten vorausschauender Umfeldsensoren zu verwenden, insbesondere Daten einer Kamera oder dergleichen. Auch Daten eines objektbasierten Umfeldsensors können betrachtet werden, wenn beispielsweise ein voranfahrendes Fahrzeug als eine Kurve fahrend detektiert wird. Besonders vorteilhaft ist es jedoch, wenn eine Datenfusion stattfindet, beispielsweise durch Plausibilisierung einer Datenquelle, beispielsweise des Navigationssystems, durch Daten einer anderen Datenquelle, beispielsweise einer Linienerkennung in Bildern einer Kamera.

Die Kurvendaten können insbesondere in einem Klothoidenmodell vorliegen und/oder die Kurve durch einen Krümmungsverlauf beschreiben. Dabei weisen Klothoiden einen linearen Krümmungsverlauf auf, so dass eine Kurve beschrieben werden kann durch ein erstes Segment, in dem die Krümmung der Kurve linear von 0 auf die maximale Krümmung der Kurve ansteigt, ein zweites Segment, letztlich die Kurve selber, in dem die Krümmung konstant bleibt, und ein drittes Segment, in dem die Krümmung linear wieder auf 0 abnimmt. Nachdem Klothoiden ohnehin häufig als Übergangsbogen bei Kurven im Straßenbau eingesetzt werden, bietet sich eine Beschreibung in einem Klothoiden-Modell besonders an. Wird eine Beschreibung der Kurve in drei Segmenten, wie soeben beschrieben, verwendet, kann vorteilhaft auf den Punkt hin geregelt werden, an dem das erste Segment endet und das zweite Segment beginnt, worauf im Folgenden noch näher eingegangen werden wird.

In vorteilhafter weitere Ausgestaltung der vorliegenden Erfindung kann vorgesehen sein, dass die Auswertung der Kurvendaten Teil eines eine Beschleunigungsempfehlung ausgebenden Berechnungsmoduls ist und noch wenigstens ein weiteres Berechnungsmodul, insbesondere ein eine Beschleunigungsempfehlung im Hinblick auf eine fahrerseitig wählbare Wunschgeschwindigkeit ausgebendes Berechnungsmodul (GRA-Modul) und/oder ein eine Beschleunigungsempfehlung im Hinblick auf die Aufrechterhaltung einer Zeitlücke zu einem voranfahrenden Fahrzeug ausgebendes Berechnungsmodul (Folgeregler), vorgesehen ist, wobei eine zur Ansteuerung des Kraftfahrzeugs zu verwendende Beschleunigungsanforderung mittels einer Priorisierung aus den Beschleunigungsempfehlungen ermittelt wird, wobei insbesondere die minimale Beschleunigungsanforderung ausgewählt wird. In diesem Fall gibt es für die verschiedenen, teilweise miteinander konkurrierenden Funktionen des längsführenden Fahrerassistenzsystems, bei einem ACC-System also die Geschwindigkeitsregelanlage (Regeln auf die Wunschgeschwindigkeit), den Folgeregler und das Bremsen auf die Kurven, jeweils ein Berechnungsmodul, wobei jedes der Berechnungsmodule eine Beschleunigungsempfehlung ausgibt, die als Empfehlung einer negativen Beschleunigung selbstverständlich auch eine Verzögerungsempfehlung sein kann. Diese verschiedenen Beschleunigungsempfehlungen werden dann innerhalb des Fahrerassistenzsystem priorisiert, so dass eine größtmögliche Sicherheit gegeben ist, wobei es sich anbietet, stets die Beschleunigungsempfehlung als Beschleunigungsanforderung zu verwenden, die die niedrigste Beschleunigung empfiehlt. Auf diese Weise ist es möglich, dass alle Funktionen gleichzeitig aktiv sind und nicht zwischen den Funktionalitäten umgeschaltet werden muss, das bedeutet, zyklisch geben alle Rechnungsmodule eine Beschleunigungsempfehlung aus. Die letztlich ermittelte Beschleunigungsanforderung ist es jedoch, die dann zur tatsächlichen Ansteuerung des Motors und/oder der Bremsen des Kraftfahrzeugs genutzt wird, um die tatsächliche Geschwindigkeitsregelung zu erzielen.

Im Rahmen der vorliegenden Erfindung wird unter Berücksichtigung der Kurvendaten eine Komfortkurvengeschwindigkeit ermittelt. Es wird also eine Komfortkurvengeschwindigkeit ermittelt, mit der es möglich wäre, komfortabel durch die Kurve zu fahren. Diese dient als Grundlage der weiteren Betrachtungen, die ein Abbremsen auf die Kurve im Rahmen des längsführenden Fahrerassistenzsystem ermöglichen. Konkret kann vorzugsweise vorgesehen sein, dass die Komfortkurvengeschwindigkeit aus einer maximalen und/oder an einer definierten Stelle einer Kurve vorliegenden Krümmung der Kurve und einer vordefinierten Komfortquerbeschleunigung ermittelt wird. Die vordefinierte Komfortquerbeschleunigung kann dabei selbstverständlich von weiteren Parametern abhängig sein, beispielsweise der Geschwindigkeit. Wie bereits beschrieben wurde, kann dann, wenn die Kurve in einem Klothoidenmodell anhand eines Krümmungsverlaufs beschrieben wird, vorgesehen sein, dass die Kurve in verschiedene Segmente eingeteilt ist, beispielsweise ein Segment linear zunehmender Krümmung, ein Segment konstanter Krümmung und ein Segment linear abnehmender Krümmung. Dann kann beispielsweise die konstante Krümmung bzw. die Krümmung zu Beginn des Segments konstanter Krümmung zur Ermittlung der Komfortkurvengeschwindigkeit betrachtet werden.

Erfindungsgemäß ist vorgesehen, dass eine Sollgeschwindigkeit des Kraftfahrzeugs an einem bestimmten Punkt der Kurve, insbesondere an dem ersten die zur Ermittlung der Komfortkurvengeschwindigkeit genützte Krümmung aufweisenden Punkt der Kurve, aus der Komfortkurvengeschwindigkeit ermittelt und bei der Regelung der Geschwindigkeit berücksichtigt wird. Abhängig von der Komfortkurvengeschwindigkeit wird also eine idealerweise durch das Fahrerassistenzsystem zu erreichende Sollgeschwindigkeit des Kraftfahrzeugs an einem bestimmten Punkt der Kurve definiert. Dieser Punkt der Kurve kann beispielsweise bei einer Beschreibung des Krümmungsverlaufes im Klothoidenmodell der Übergang von dem ersten Segment auf das zweite Segment sein. Auf diesen Punkt hin wird also geregelt. Dabei sind verschiedenste Ausgestaltungen denkbar, wie genau die Sollgeschwindigkeit gewählt werden kann und wie aus der Sollgeschwindigkeit die konkrete Regelung (bzw. bei der Verwendung von Berechnungsmodulen die Beschleunigungsempfehlung) folgt.

So kann in einer ersten, nicht zur Erfindung gehörigen Ausführungsform der vorliegenden Erfindung vorgesehen sein, dass als Sollgeschwindigkeit die Komfortkurvengeschwindigkeit gewählt wird, insbesondere wenn diese niedriger als eine aktuelle Geschwindigkeit des Kraftfahrzeugs ist. In diesem Fall übernimmt das längsführende Fahrerassistenzsystem das Herunterbremsen des Kraftfahrzeugs, falls nötig, also komplett, so dass am relevanten Punkt der Kurve, beispielsweise dem Übergang vom ersten Segment zu dem zweiten Segment, eine Geschwindigkeit des Kraftfahrzeugs vorliegt, mit der die Kurve komfortabel befahren werden kann. Der Fahrer muss mithin selbst keinerlei Längsführungseingriff vornehmen.

Dies ist jedoch nicht immer erwünscht, beispielsweise, wenn die Aufmerksamkeit des Fahrers in der Kurve besonders gefördert werden soll. Entsprechend ist es im Rahmen des erfindungsgemäßen Verfahrens vorgesehen, die Sollgeschwindigkeit anderweitig aus der Komfortkurvengeschwindigkeit auszuwählen, so dass zwar durch das längsführende Fahrerassistenzsystem auf die Kurve reagiert werden kann, jedoch nicht zwangsläufig so stark, dass ein Eingriff des Fahrers nicht mehr nötig wäre.

So kann erfindungsgemäß vorgesehen sein, dass, wenn die Komfortkurvengeschwindigkeit kleiner als die aktuelle Geschwindigkeit des Kraftfahrzeugs ist, als Sollgeschwindigkeit, wenn die Komfortkurvengeschwindigkeit um weniger als ein vorbestimmter Schwellwert von der aktuellen Geschwindigkeit abweicht, die Komfortkurvengeschwindigkeit gewählt wird und, wenn die Komfortkurvengeschwindigkeit um mehr als ein vorbestimmter Schwellwert von der aktuellen Geschwindigkeit abweicht, die aktuelle Geschwindigkeit abzüglich des vorbestimmten Schwellwerts gewählt wird. Dabei wird die aktuelle Geschwindigkeit bei den zyklischen Neuberechnungen solange für den Vergleich herangezogen, bis der tatsächliche kurvenbezogene Abbremsvorgang beginnt, also insbesondere zum Beginn einer im Folgenden noch näher diskutierten Abbremsphase. Referenz ist letztlich die Geschwindigkeit des Kraftfahrzeugs zum Beginn der tatsächlich auf die Reduzierung der Geschwindigkeit abzielenden Regelmaßnahmen, konkret insbesondere der Beginn der Abbremsphase und/oder der Zeitpunkt, zu dem das dem Kurvenassistenten zugeordnete Berechnungsmodul zum ersten Mal eine Verzögerung als Beschleunigungsempfehlung ausgibt. Auf diese Art und Weise wird eine Art Mini-Kurvenassistent realisiert, bei dem die Geschwindigkeit maximal um den vorbestimmten Schwellwert abgebaut wird, beispielsweise um maximal 10 km/h. Das hat den Vorteil, dass sich der Fahrer nicht auf die Kurvenassistenzfunktion des längsführenden Fahrerassistenzsystems verlassen kann, das bedeutet, dass er weiter gewohnt ist, bei Kurven mit engen Radien immer einzugreifen. Ferner ermöglicht diese Ausgestaltung einen harmonischen Übergang in einen gegebenenfalls ohnehin vorhandenen Kurvenregler, der erst nach Aufbau einer Querbeschleunigung die Geschwindigkeit des Kraftfahrzeugs anhand der Querbeschleunigung einregelt. Dabei sei an dieser Stelle angemerkt, dass auch einem derartigen Kurvenregler selbstverständlich ein Berechnungsmodul, wie es oben beschrieben wurde, zugeordnet sein kann, möglich ist es aber auch, dass der Kurvenregler mit in das der Wunschgeschwindigkeit zugeordnete Berechnungsmodul (GRA-Modul) integriert ist. Schließlich ist die zusätzliche Kurvenassistenz-Funktionalität, die durch diese Ausgestaltung des erfindungsgemäßen Verfahrens realisiert wird, für den Normalfahrer so "versteckt", dass eine Anzeige nicht notwendig ist, sondern einfach nur ein harmonischeres Fahren in eine Kurve ermöglicht wird. Ähnliches lässt sich erreichen, wenn beispielsweise vorgesehen ist, dass, wenn die Komfortkurvengeschwindigkeit kleiner als die aktuelle Geschwindigkeit des Kraftfahrzeugs ist, als Sollgeschwindigkeit die aktuelle Geschwindigkeit abzüglich eines vorbestimmten prozentualen Anteils des Abstandes zwischen der aktuellen Geschwindigkeit und der Komfortkurvengeschwindigkeit gewählt wird, wobei beispielsweise mit einem prozentualen Anteil von 10 % gearbeitet werden kann, um einen ähnlichen Effekt zu erzielen wie bei dem bereits erwähnten "Mini-Kurvenassistenten". Auch hier gilt, dass als Referenz für die aktuelle Geschwindigkeit der Beginn der Abbremsphase oder des tatsächlich verzögernden Regelns auf die Kurve betrachtet wird.

Schließlich ist es in einer nicht erfindungsgemäßen Ausgestaltung auch denkbar, dass, wenn die Komfortkurvengeschwindigkeit kleiner als die aktuelle Geschwindigkeit des Kraftfahrzeugs ist, als Sollgeschwindigkeit, wenn die Komfortkurvengeschwindigkeit größer als ein vorbestimmter Schwellwert ist, die Komfortkurvengeschwindigkeit gewählt wird, wenn die Komfortkurvengeschwindigkeit kleiner als ein vorbestimmter Schwellwert ist, der vorbestimmte Schwellwert gewählt wird. Eine derartige Einschränkung kann aus Sicherheitsgründen sinnvoll sein, nachdem in diesem Fall nicht die komplette Geschwindigkeit abgebaut werden kann, die zu einer Kurvendurchfahrt notwendig wäre, sondern der Geschwindigkeitsabbau auf eine bestimmte Geschwindigkeit, die zwar deutlich größer als beim "Mini-Kurvenassistent" sein kann, beschränkt ist. Beispielsweise kann als vorbestimmter Schwellwert hier eine Geschwindigkeit von 70 km/h gewählt werden.

Insbesondere dann, wenn die hier beschriebene Kurvenassistenz-Funktion des längsführenden Fahrerassistenzsystems als ein Berechnungsmodul realisiert ist, wie oben bereits dargelegt, ist es denkbar, um ständig eine Beschleunigungsempfehlung erzeugen zu können, auch dann eine Sollgeschwindigkeit zu definieren, wenn diese größer als die aktuelle Geschwindigkeit des Kraftfahrzeugs ist. Beispielsweise kann dann grundsätzlich die Sollgeschwindigkeit auf die Komfortkurvengeschwindigkeit gesetzt werden; es sind jedoch auch andere Lösungen für diesen Fall denkbar, beispielsweise eine unmittelbare Ausgabe einer maximal mit dem Fahrerassistenzsystem erlaubten Beschleunigung oder dergleichen. Relevant ist für diesen Fall nur die Feststellung, dass nur dann Geschwindigkeit des Kraftfahrzeugs abgebaut werden muss, wenn die Komfortkurvengeschwindigkeit kleiner als die aktuelle Geschwindigkeit des Kraftfahrzeugs ist.

In einer bevorzugten Weiterbildung der vorliegenden Erfindung kann vorgesehen sein, dass ein Verzögerungsverlauf sowie ein Zeitpunkt zum Beginn dieses Verzögerungsverlaufs unter Berücksichtigung der Sollgeschwindigkeit ermittelt und in einer zu dem Zeitpunkt beginnenden Abbremsphase der Verzögerungsverlauf angewandt wird, um das Kraftfahrzeug auf die Sollgeschwindigkeit abzubremsen, wobei eine vordefinierte maximal erlaubte Verzögerung vorgesehen ist. Die Dauer der Abbremsphase wird vorliegend also durch die abzubauende Geschwindigkeit bestimmt, nachdem ein grundsätzlicher, definierter Verzögerungsverlauf angesetzt werden kann, bei dem nicht die Verzögerung auf die abzubauende Geschwindigkeit angepasst wird, sondern eben die Dauer der Abbremsphase, so dass der Komfort bei dem Bremsvorgang aufrecht erhalten werden kann. Letztlich umfasst der Verzögerungsverlauf eine Abfolge negativer Beschleunigungen, die das Kraftfahrzeug auf die Sollgeschwindigkeit abbremsen. Dabei sei angemerkt, dass eine Anwendung des Verzögerungsverlaufes zum einen selbstverständlich bereits eine direkte Ansteuerung des Motors, insbesondere auch im Hinblick auf eine Motorbremse, und der Bremsen des Kraftfahrzeugs bedeuten kann, es jedoch auch, wenn wie beschrieben vorzugsweise Berechnungsmodule vorgesehen sind, denkbar ist, dass der Verzögerungsverlauf als Beschleunigungsempfehlung des entsprechenden Berechnungsmoduls ausgegeben wird.

Bekannt sind die Sollgeschwindigkeit und die aktuelle Istgeschwindigkeit des Kraftfahrzeugs. Hieraus folgt eine Geschwindigkeitsdifferenz, die das Integral des Verzögerungsverlaufs sein muss. Dabei ist selbstverständlich eine gewisse Zeitdauer notwendig, um abzubremsen, nachdem eine maximal erlaubte Verzögerung, die beispielsweise nach Komfortkriterien gewählt werden kann, vorgesehen ist. Nachdem nun der Zeitpunkt bekannt ist, an dem die Sollgeschwindigkeit erreicht werden soll, nämlich der bereits erwähnt ausgezeichnete Punkt der Kurve, lässt sich mittels der Zeitdauer auch der Zeitpunkt zum Beginn des Verzögerungsverlaufs bestimmen, welcher selbstverständlich auch der aktuelle Zeitpunkt sein kann.

Dabei sei an dieser Stelle nochmals allgemein angemerkt, dass selbstverständlich im Rahmen der Geschwindigkeitsregelung zyklisch eine Neuberechnung stattfindet, das bedeutet, jegliche Regelungsmaßnahmen werden zyklisch unter Berücksichtigung der aktuellen Position und Geschwindigkeit des Kraftfahrzeugs neu ermittelt, insbesondere also auch der Verzögerungsverlauf und die daraus folgende Dauer der Abbremsphase, wobei, wie beschrieben, bei einer Beschränkung des Geschwindigkeitsabbaus der Beginn der Abbremsphase als Referenz für die letzte Vergleichsgeschwindigkeit verwendet werden kann.

Zur Ermittlung des Verzögerungsverlaufs kann in einer konkreten Ausgestaltung der vorliegenden Erfindung vorgesehen sein, dass die Verzögerung linear bis auf die maximal erlaubte Verzögerung erhöht wird, wobei wenigstens zwei unterschiedliche, durch ein durch Wirkung der Motorbremse definiertes Plateau getrennte Steigungen vorgesehen sind. Eine solche lineare Veränderung der Verzögerung (negativen Beschleunigung) ist besonders einfach konstruierbar, wobei durch Verwendung unterschiedlicher Steigungen der Vorgang beispielsweise dem Verhalten eines realen Fahrers, wenn dieser auf eine Kurve hin abbremst, nachgebildet werden kann. Der Verzögerungsverlauf besteht dann aus einer Rampe im negativen Beschleunigungsbereich mit einem oder mehreren applizierbaren Begrenzungsrucken. Auf diese Weise kann beispielsweise auch zunächst eine Motorbremse mit einer ersten Steigung aktiviert werden und für die Dauer des Plateaus genutzt werden, bevor die Bremsen angesteuert werden und eine weitere Steigung eingesetzt wird..

Vorzugsweise kann ferner bei der Berechnung des Zeitpunkts zu Beginn des Verzögerungsverlaufs eine Toleranzzeit berücksichtigt werden. Eine Berücksichtigung einer derartigen Toleranz ist insbesondere sinnvoll, nachdem die Abstandsinformation (bis hin zu dem ausgezeichneten Punkt der Kurve, an dem die Sollgeschwindigkeit erreicht sein soll) mit einem Messfehler behaftet sein kann. Mithin kann zwar vorgesehen sein, dass die Toleranzzeit fest vorgegeben ist, möglich ist es jedoch auch, die Toleranzzeit abhängig von Parametern zu wählen, beispielsweise abhängig von der aktuellen Geschwindigkeit des Kraftfahrzeugs, einem ermittelten Messfehler und/oder weiteren Parametern.

In einer besonders vorteilhaften Ausgestaltung der vorliegenden Erfindung kann vorgesehen sein, dass der Verzögerungsverlauf um eine Beschleunigungsabbauphase und/oder eine Beschleunigungsbegrenzungsphase, insbesondere jeweils von vorbestimmter Dauer, ergänzt wird, wobei in der Beschleunigungsabbauphase eine maximal mögliche Beschleunigungsanforderung des Fahrerassistenzsystems insbesondere linear auf eine insbesondere vordefinierte Zwischenbeschleunigung erniedrigt wird und in der Beschleunigungsbegrenzungsphase konstant die Zwischenbeschleunigung angesetzt wird, welche zum Beginn der Abbremsphase auf Null erniedrigt wird. Dabei sei an dieser Stelle erneut darauf hingewiesen, dass eine maximal mögliche Beschleunigung einer minimalen Verzögerung entspricht. Ferner sei an dieser Stelle darauf hingewiesen, dass die Realisierung vorteilhaft so getroffen sein kann, dass bei Verwendung eines Berechnungsmoduls "Kurvenassistent" außerhalb der verwendeten Phasen - Abbremsphase, Beschleunigungsabbauphase und/oder Beschleunigungsbegrenzungsphase - als Beschleunigungsempfehlung die maximal erlaubte Beschleunigung des Fahrerassistenzsystems angesetzt werden kann.

Bevorzugt wird erfindungsgemäß also ein dreiphasiger Verzögerungsverlauf verwendet, der den Fahrer möglichst komfortabel an die Kurve heranführt und schließlich die Sollgeschwindigkeit einstellt. In einer ersten Phase wird die mögliche Beschleunigung, insbesondere also die Beschleunigungsempfehlung, mit einer definierten Rampe von der maximal möglichen Beschleunigung des Fahrerassistenzsystems heruntergerampt. Die zweite Phase, die Beschleunigungsbegrenzungsphase, zeichnet sich dadurch aus, dass keine Beschleunigung bzw. nur eine geringe applizierbare Beschleunigung angefordert werden darf. Dabei ist es von Vorteil, wenn in der zweiten Phase auch weiterhin noch eine geringe Beschleunigung durch das Fahrerassistenzsystem möglich ist, konkret die bereits beschriebene Zwischenbeschleunigung für die Abbremsphase. Das hat den Vorteil, dass der Fahrer durchaus bemerkt, dass das Fahrerassistenzsystem noch aktiv ist, jedoch nur eingeschränkt, so dass er zusätzlich auf die Kurve aufmerksam wird, ohne eine Fehlfunktion des Fahrerassistenzsystems befürchten zu müssen.

Insgesamt können also die erste Phase, die Beschleunigungsabbauphase, die zweite Phase, die Beschleunigungsbegrenzungsphase, so gewählt werden, dass sie grundsätzlich immer gleich sind und eine gleichlange Dauer aufweisen. In diesem Fall starten die beiden vor der Abbremsphase liegende Phasen immer im identischen zeitlichen Abstand zu der Abbremsphase. Möglich ist es jedoch auch, die Eigenschaften der Beschleunigungsabbauphase und der Beschleunigungsbegrenzungsphase abhängig von wenigstens einem Betriebsparameter des Kraftfahrzeugs zu wählen, insbesondere abhängig von einem gewählten Fahrprogramm. Hat der Fahrer beispielsweise ein sportliches Fahrprogramm aktiviert, so kann die Zeitdauer der Beschleunigungsabbauphase und der Beschleunigungsbegrenzungsphase stark eingeschränkt werden, nachdem ein dynamisches Reagieren auch des Fahrerassistenzsystems gewünscht ist. Insbesondere kann die Beschleunigungsbegrenzungsphase gänzlich weggelassen werden. Möglich ist es jedoch auch, Betriebsparameter zu nutzen, insbesondere ein ausgewähltes Fahrprogramm, um den Verzögerungsverlauf in der Abbremsphase bezüglich der Fahrdynamik anders zu gestalten, beispielsweise, indem größere Steigungen eingesetzt werden und dergleichen.

Es sei an dieser Stelle noch angemerkt, dass dann, wenn die Kurvendaten mehrere aufeinanderfolgende Kurven beschreiben, selbstverständlich für jede Kurve eine eigene Beschleunigungsanforderung bzw. eigene Verzögerungsverläufe berechnet werden können, wobei die Zeit bis zur Kurve, die Dauer der Beschleunigungsabbauphase und damit auch der Beginn der anderen Phasen unterschiedlich ist.

Es kann ferner vorgesehen sein, dass die Sollgeschwindigkeit dem Fahrer zur Anzeige gebracht wird. Auf diese Weise kann dem Fahrer die Reaktion des Fahrerassistenzsystems auf die Kurve verdeutlicht werden. Hierzu kann beispielsweise vorgesehen sein, die Sollgeschwindigkeit mit Hilfe eines Tachobandes oder der einfachen Darstellung der Sollgeschwindigkeit in einem Kombinationsdisplay darzustellen. Auch können Kurven unterschiedlicher Krümmung angezeigt werden. Dies ist besonders vorteilhaft, weil der Fahrer letztlich als eine Plausibilitätsinstanz hinzugezogen werden kann, nachdem er selbst abschätzen kann, ob die gewählte Sollgeschwindigkeit geeignet zum Durchfahren der Kurve ist. Beispielsweise können durch Daten- und/oder Messfehler auch Fehler in der Sollgeschwindigkeit auftreten, wobei dann eine zu geringe Bremsung auf eine Kurve erfolgen könnte. Ohne eine Anzeige, wie sie hier vorgestellt würde, wäre der Fahrer der Ansicht, das Fahrerassistenzsystem reagiere auf gewohnte Weise auf die kommende Kurve, wobei die Sollgeschwindigkeit jedoch deutlich zu hoch für die Kurve gewählt ist. Durch die Darstellung der Sollgeschwindigkeit kann dem Fahrer mitgeteilt werden, wie das Fahrerassistenzsystem zu reagieren gedenkt und der Fahrer selbst kann entscheiden, ob dies ausreichend ist.

Jedoch ist es auch allgemein vorteilhaft, wenn vorgesehen ist, dass immer dann, wenn eine Regelung der Geschwindigkeit des Kraftfahrzeugs aufgrund von Kurvendaten erfolgt, dies einem Fahrer zur Anzeige gebracht wird, insbesondere durch Hinterleuchtung eines Symbols. Bei bekannten ACC-Systemen ist beispielsweise häufig immer dann, wenn ein Folgemodus aktiv ist, das bedeutet, auf Zeitlücke bezüglich eines voranfahrenden Fahrzeugs geregelt wird, dies dem Fahrer dadurch zur Anzeige zu bringen, dass beispielsweise ein Symbol eines Kraftfahrzeugs hinterleuchtet wird. Nachdem gegebenenfalls ein deutlicher Eingriff des Fahrerassistenzsystems im Hinblick auf eine Kurve erfolgt, kann dem Fahrer auch eine Information darüber gegeben werden, weshalb der Eingriff durchgeführt wurde. Mithin kann analog zu einem hinterleuchtbaren Fahrzeugsymbol im Folgemodus beispielsweise vorgesehen sein, dass eine Kurve oder ein anderes Symbol hinterleuchtet wird, um darzustellen, dass gerade auf eine Kurve geregelt wird. Dabei kann vorgesehen sein, dass zwischen einer Linkskurve und einer Rechtskurve unterschieden wird, mithin beispielsweise zwei hinterleuchtbare Symbole vorgesehen werden.

Neben dem Verfahren betrifft die vorliegende Erfindung auch ein Kraftfahrzeug, umfassend ein längsführendes Fahrerassistenzsystem mit einer Steuereinrichtung, die zur Durchführung des erfindungsgemäßen Verfahrens ausgebildet ist. Sämtliche Ausführungen bezüglich des erfindungsgemäßen Verfahrens lassen sich analog auf das erfindungsgemäße Kraftfahrzeug übertragen, so dass auch mit diesem die bereits genannten Vorteile erreicht werden können.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipskizze eines erfindungsgemäßen Kraftfahrzeugs,
- Fig. 2: eine Skizze zur Grundfunktionalität des erfindungsgemäßen Kraftfahrzeugs,
- Fig. 3: die Beschreibung einer Kurve als Krümmungsverlauf in einem Klothoiden-Modell,
- Fig. 4: ein möglicher Beschleunigungsempfehlungsverlauf, und
- Fig. 5: eine Anzeigevorrichtung für das Fahrerassistenzsystem.

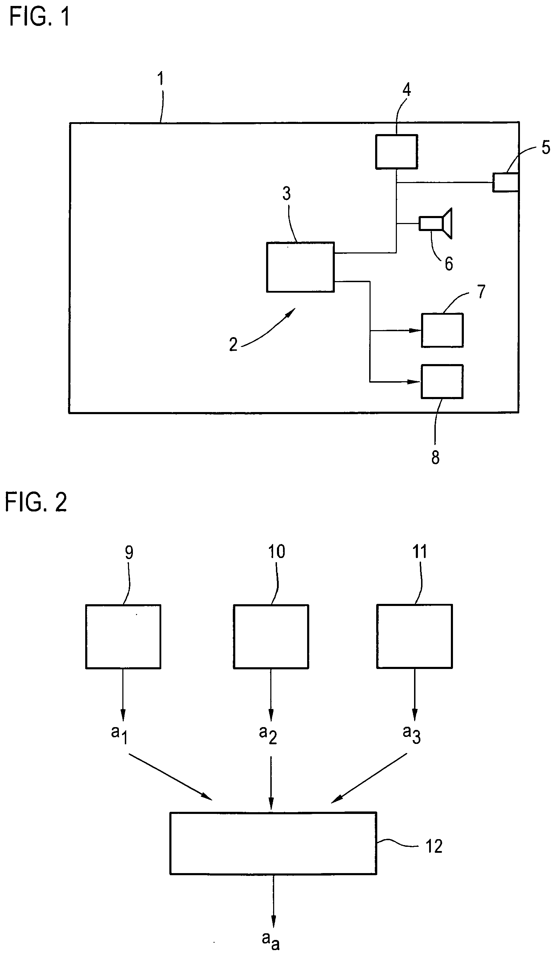

Fig. 1 zeigt ein erfindungsgemäßes Kraftfahrzeug 1 in einer Prinzipskizze. Es umfasst ein längsführendes Fahrerassistenzsystem 2, hier ein ACC-System, das erfindungsgemäß um eine Kurvenassistenz-Funktion erweitert wurde. Der Betrieb des Fahrerassistenzsystem 2 wird durch eine Steuereinrichtung 3 gesteuert, die auch zur Durchführung des erfindungsgemäßen Verfahrens ausgebildet ist. Die Steuereinrichtung 3 empfängt Daten eines Navigationssystems 4, eines Radarsensors 5 und einer Kamera 6, wobei der Radarsensor 5 und die Kamera 6 vorausschauende Umfeldsensoren darstellen. Aus den Daten dieser Sensoren können eine oder mehrere als nächstes durch das Kraftfahrzeug 1 zu durchfahrende Kurven beschreibende Kurvendaten ermittelt werden. Diese werden bei der Geschwindigkeitsregelung des Kraftfahrzeugs 1 durch das Fahrerassistenzsystem 2 berücksichtigt.

Ausgabeparameter des Fahrerassistenzsystems 2 ist eine bestimmte Beschleunigungsanforderung, die die Grundlage für eine entsprechende Ansteuerung des Motors 7 und des Bremssystems 8 des Kraftfahrzeugs 1 bilden.

Fig. 2 erläutert nun die grundsätzliche Funktionsweise des Fahrerassistenzsystems 2 genauer. Den Funktionen des Fahrerassistenzsystems 2 sind dabei jeweils Berechnungsmodule 9, 10 und 11 zugeordnet. Jedes dieser Berechnungsmodule 9, 10, 11 liefert als Ausgabe zyklisch eine aktuelle Beschleunigungsempfehlung a₁, a₂ bzw. a₃. In einem Priorisierungsschritt 12 wird einer dieser Beschleunigungsempfehlungen gefolgt, das bedeutet, es wird eine Beschleunigungsanforderung aₐ ermittelt, die dann letztlich die Ansteuerung des Motors 7 und des Bremssystems 8 bestimmt.

Vorliegend entsprechen die Berechnungsmodule 9, 10 den herkömmlichen Funktionen eines ACC-Systems, wobei das Berechnungsmodul 9 der Funktion "Geschwindigkeitsregelanlage" entspricht. Dabei wird auf eine Wunschgeschwindigkeit, die vom Fahrer eingestellt werden kann, geregelt. Das Berechnungsmodul 10 entspricht der Funktion "Folgeregler". Wird ein voranfahrendes Fahrzeug detektiert, beispielsweise über den Radarsensor 5, so wird die Geschwindigkeit des Kraftfahrzeugs 1 so geregelt, dass eine zuvor festgelegte oder durch einen Fahrer bestimmte Zeitlücke zu dem voranfahrenden Fahrzeug aufrechterhalten wird. Neu hinzu kommt im Rahmen der vorliegenden Erfindung das Berechnungsmodul 11, dessen Funktionalität im Folgenden näher dargestellt werden wird. Es nutzt die ermittelten Kurvendaten, um, falls nötig, das Kraftfahrzeug 1 auf eine Kurve hin abzubremsen.

Es sei an dieser Stelle noch angemerkt, dass auch ein einzelnes Berechnungsmodul für eine Funktion "Kurvenregler" gegeben sein kann, die die Geschwindigkeit des Kraftfahrzeugs anhand einer Querbeschleunigung des Kraftfahrzeugs regelt. Im vorliegenden Fall ist die Funktion "Kurvenregler", die die Maximalgeschwindigkeit des Kraftfahrzeugs 1 in Abhängigkeit von der aktuellen Querbeschleunigung begrenzt, in die Funktion "Geschwindigkeitsregelanlage" integriert, mithin auch im Berechnungsmodul 9 enthalten.

Nachdem die Funktion der Berechnungsmodule 9 und 10 im Stand der Technik bereits grundsätzlich bekannt ist, wird hier nicht näher darauf eingegangen.

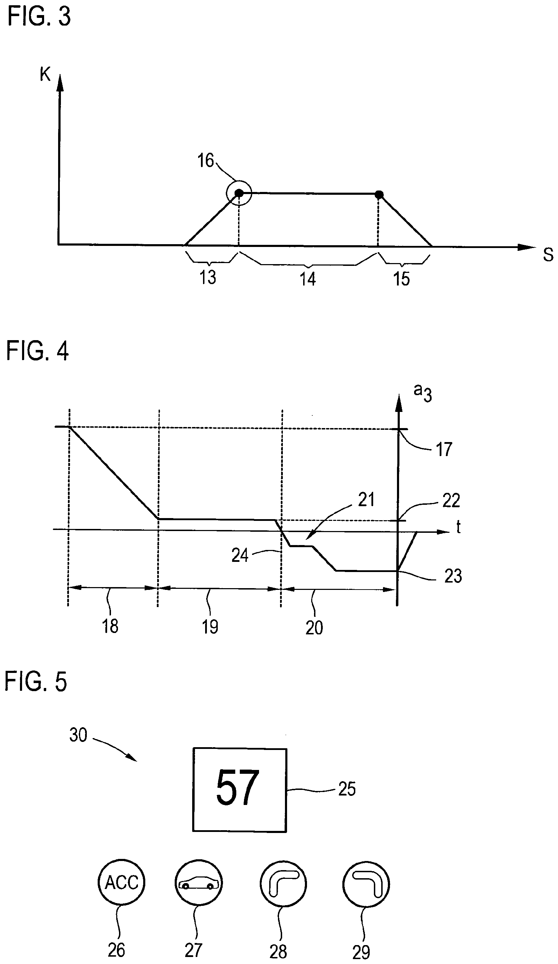

Wie bereits erwähnt, bilden die Grundlage für die Funktion "Kurvenassistent" Kurvendaten, die vorliegend in einem Klothoiden-Modell als Krümmungsverlauf betrachtet werden, wie dies beispielhaft in Fig. 3 dargestellt ist. Dort ist die Krümmung K über die Strecke S aufgetragen. Ersichtlich zeichnet sich eine Kurve in einem ersten Segment 13 durch einen linearen Anstieg der Krümmung aus. In einem zweiten Segment 14 bleibt diese maximale Krümmung der Kurve konstant. In einem dritten Segment 15 fällt die Krümmung wiederum linear auf 0 ab. Die maximale Krümmung der Kurve, wie sie im zweiten Segment 14 vorliegt, und der Ort 16, an dem das erste Segment 13 in das zweite Segment 14 übergeht, werden im erfindungsgemäßen Verfahren weiter verwertet, um zum einen eine Sollgeschwindigkeit zu bestimmen, die zum anderen am Ort 16 eingenommen sein soll.

Existieren die Informationen der Entfernung und der Krümmung einer kommenden Kurve, so kann aufgrund dieser Informationen, der Kurvendaten, ein Verzögerungsverlauf berechnet werden, der eine komfortable Reaktion des Kraftfahrzeugs 1 auf diese Kurve zulässt. Ein solcher Verzögerungsverlauf ist als Beschleunigungsverlauf (also negativ) beispielhaft in Fig. 4 dargestellt. Dort ist die vorausberechnete Beschleunigungsempfehlung a₃ gegen die Zeit t dargestellt. Ist eine Reaktion auf eine Kurve zur Zeit nicht erforderlich, wird dabei grundsätzlich als Beschleunigungsempfehlung die maximal mit dem Fahrerassistenzsystem 2 mögliche Beschleunigung 17 ausgegeben. Zur Vorbereitung auf eine Kurve können jedoch drei Phasen unterschieden werden, nämlich zunächst eine Beschleunigungsabbauphase 18 als erste Phase, eine Beschleunigungsbegrenzungsphase 19 als zweite Phase und eine Abbremsphase 20 als dritte Phase.

Zunächst wird durch das Berechnungsmodul 11 jedoch eine Komfortkurvengeschwindigkeit berechnet, mit der man komfortabel durch die Kurve fahren kann. Diese wird aus der maximalen Kurvenkrümmung, also der Krümmung im zweiten Segment der Kurve, und einer definierten komfortablen Querbeschleunigung berechnet. Diese Querbeschleunigung kann von weiteren Parametern abhängen, beispielsweise geschwindigkeitsabhängig sein, ist in jedem Fall jedoch vorbestimmt und beispielsweise in der Steuereinrichtung 3 abgelegt.

Ist die berechnete Komfortkurvengeschwindigkeit größer als die aktuelle Geschwindigkeit des Kraftfahrzeugs 1, so soll nicht auf die Kurve reagiert werden, so dass als Beschleunigungsempfehlung a₃ weiterhin die maximal mit dem Fahrerassistenzsystem 2 mögliche Beschleunigung 17 ausgegeben wird. Ist die Komfortkurvengeschwindigkeit jedoch kleiner als die aktuelle Geschwindigkeit des Kraftfahrzeugs 1, so muss diese Geschwindigkeit abgebaut werden. Im vorliegenden Fall wird nun zunächst ein nicht erfindungsgemäßes Ausführungsbeispiel diskutiert, in dem eine Sollgeschwindigkeit, die am Punkt 16, also dann, wenn auch die maximale Kurvenkrümmung erreicht ist, erreicht werden soll, als die Komfortkurvengeschwindigkeit definiert wird. Es sei an dieser Stelle noch angemerkt, dass es selbstverständlich auch denkbar ist, neben dem Punkt 16 weitere Referenzpunkte zu wählen, beispielsweise bereits zum Beginn des ersten Segments der Kurve oder dergleichen.

Zum Geschwindigkeitsabbau wird die Abbremsphase 20 definiert, in der ein gesteuertes Verzögerungsverhalten, also ein Verzögerungsverlauf, berechnet wird. Der Verzögerungsverlauf besteht vorliegend aus einer Rampe 21 im negativen Beschleunigungsbereich, die ein oder mehrere applizierbare Begrenzungsrucke aufweist. Dabei kann beispielsweise zunächst mit einer Motorbremse gearbeitet werden, bevor die eigentliche Bremse mit angesteuert wird, so dass mithin zwei verschiedene Steigungen in der Rampe 21 existieren, die durch ein Plateau, in dem nur die Motorbremse angewandt wird, getrennt sind. Die Beschleunigung wird solange erniedrigt, das bedeutet, die Verzögerung wird solange erhöht, bis ausgehend von einer Beschleunigung/Verzögerung von Null, eine einer maximal erlaubten Verzögerung entsprechende minimal erlaubte Beschleunigung 23 erreicht ist. Diese maximal erlaubte Verzögerung soll solange anliegen, bis die Sollgeschwindigkeit, hier die Komfortkurvengeschwindigkeit, erreicht ist. Daraus bestimmt sich insgesamt auch die Dauer der Abbremsphase 20.

Dabei lässt sich die abzubauende Geschwindigkeit über das zeitliche Integral über den Beschleunigungsverlauf in der Abbremsphase berechnen. Nachdem die abzubauende Geschwindigkeit - die Differenz zwischen der aktuellen Geschwindigkeit des Kraftfahrzeugs 1 und der Sollgeschwindigkeit - bekannt ist, kann über das Integral und den vorgegebenen Verzögerungsverlauf der Zeitpunkt 24 ermittelt werden, zu dem die Abbremsphase 20 beginnen muss, nachdem die Entfernung zur Kurve und der Ort 16, an dem die Sollgeschwindigkeit erreicht werden soll, ja bekannt sind. Da der Verlauf der Beschleunigungsabbauphase 18 und der Beschleunigungsbegrenzungsphase 19 vorgegeben sind, ergeben sich deren Startzeitpunkte entsprechend aus dem Zeitpunkt 24. Von Vorteil ist es, wenn für unterschiedliche "Fahrprogramme" unterschiedliche Dauern und/oder sonstige Eigenschaften der Beschleunigungsabbauphase 18 und der Beschleunigungsbegrenzungsphase 19 vorliegen. Beispielsweise können im Fall eines sportlichen Fahrprogramms kürzere Phasen 18, 19 eingesetzt werden als bei einem Komfort-Fahrprogramm und dergleichen.

Dabei wird vorliegend jedoch noch eine Toleranzzeit berücksichtigt, da die Kurvendaten, insbesondere die Abstandsinformation, mit einem Messfehler behaftet sein kann. Es sei angemerkt, dass in einem anderen Ausführungsbeispiel bei der abzubauenden Geschwindigkeit die aktuelle Beschleunigungsanforderung mitberücksichtigt werden kann.

Die Beschleunigungsabbauphase 18 und die Beschleunigungsbegrenzungsphase 19 sollen dabei im vorliegenden Ausführungsbeispiel immer im identischen zeitlichen Abstand zur Abbremsphase 20 starten. Dabei zeichnet sich die Beschleunigungsbegrenzungsphase 19 dadurch aus, dass vorliegend nur eine geringe applizierbare Beschleunigung angefordert werden darf, hier also, dass die Beschleunigungsempfehlung a₃ konstant auf dem Wert einer noch positiven Zwischenbeschleunigung 22 gehalten wird und erst zum Beginn der Abbremsphase 20 linear auf Null absinkt, insbesondere mit der selben Steigung, mit der die Beschleunigungsempfehlung zu Beginn der Abbremsphase 20 weiter sinkt. Die Beschleunigungsabbauphase zeichnet sich dadurch aus, dass die Beschleunigungsempfehlung a₃ mit einer definierten Rampe von der maximal möglichen Beschleunigung 17 heruntergerampt wird.

Dabei sei an dieser Stelle noch angemerkt, dass, wenn von der vorausschauenden Umfeldsensorik und/oder dem Navigationssystem 4 mehrere Kurven hintereinander gemeldet werden, für jede Kurve ein derartiger Verlauf der Beschleunigungsempfehlung a₃ berechnet werden kann, wobei aus der abzubauenden Geschwindigkeit bis zu der Sollgeschwindigkeit eine andere Dauer der Abbremsphase folgt und damit auch der Beginn der anderen Phasen 18, 19 unterschiedlich ist.

Die tatsächliche Beschleunigungsanforderung des Fahrerassistenzsystems 2 ergibt sich dann wie bezüglich der Fig. 2 bereits beschrieben.

Fig. 5 zeigt schließlich eine Anzeigevorrichtung 30, die für das Fahrerassistenzsystem 2 verwendet werden kann. Ersichtlich umfasst die Anzeigevorrichtung 30 ein Display 25, auf dem die Sollgeschwindigkeit dem Fahrer zur Anzeige gebracht werden kann. Weiterhin wird mehrere hinterleuchtbare Symbole 26, 27, 28 und 29 vorgesehen, wobei eine Hinterleuchtung des Symbols 26 den grundsätzlichen Betrieb des Fahrerassistenzsystems 2 kennzeichnet. Das Hinterleuchten des Symbols 27 zeigt an, dass ein voranfahrendes Fahrzeug detektiert wurde, sich das Fahrerassistenzsystem 2 mithin im Folgemodus befindet. Schließlich sind noch die hinterleuchtbaren Symbole 28 und 29 vorgesehen, wobei das Symbol 28 hinterleuchtet wird, wenn das Fahrerassistenzsystem 2 gerade auf einer Rechtskurve regelt, das Symbol 29 hinterleuchtet wird, wenn das Fahrerassistenzsystem 2 gerade auf eine Linkskurve regelt. Eine unterschiedliche Kurvenkrümmung kann durch unterschiedliche Symbole mit entsprechenden Pfeilkrümmungen angedeutet werden. So werden dem Fahrer alle nötigen Informationen zur Kenntnis gebracht, um das Verhalten des Fahrerassistenzsystems 2 zu verstehen und bewerten zu können.

Dabei sei an dieser Stelle angemerkt, dass selbstverständlich auch andere Anzeigemittel verwendet werden können, beispielsweise ein Tachoband für die Anzeige der Sollgeschwindigkeit und/oder ein Display statt der Symbole 26 - 29.

Abschließend sei noch angemerkt, dass in erfindungsgemäßen Ausführungsbeispielen die Sollgeschwindigkeit nicht als die Komfortkurvengeschwindigkeit gewählt wird, sondern dass es denkbar ist, aus Sicherheits- und/oder Komfortgründen die Funktion des Fahrerassistenzsystems 2 einzuschränken.

So kann vorgesehen sein, dass nur ein maximaler Abbau der Geschwindigkeit erlaubt wird, beispielsweise ein maximaler Geschwindigkeitsabbau von 10 km/h, wobei als letzte Referenz die aktuelle Geschwindigkeit des Kraftfahrzeugs zu Beginn der Abbremsphase 20 verwendet wird. Die Regelung ist dabei analog zu dem bezüglich der Fig. 2 - 4 beschriebenen, wobei jedoch die Dauer der Abbremsphase 20 so begrenzt ist, dass maximal 10 km/h als vordefinierter Schwellwert von der aktuellen Geschwindigkeit des Kraftfahrzeugs 1 zu Beginn der Abbremsphase 20 abgebaut werden können.

Ferner ist es in einem nicht erfindungsgemäßen Ausführungsbeispiel denkbar, dass eine Geschwindigkeit als vordefinierter Schwellwert definiert wird, die durch den Geschwindigkeitsabbau nicht unterschritten werden kann, beispielsweise 70 km/h. Erfindungsgemäß ist ein Abbau lediglich eines prozentualen Anteils der Geschwindigkeit denkbar.

## Patentansprüche

1. Verfahren zum Betrieb eines längsführenden Fahrerassistenzsystems (2) eines Kraftfahrzeugs (1), wobei abhängig von wenigstens einem Regeldatum die Geschwindigkeit des Kraftfahrzeugs (1) geregelt wird, wobei als weitere Regeldaten Kurvendaten bezüglich wenigstens einer als nächstes durch das Kraftfahrzeug (1) zu durchfahrenden Kurve bei der Regelung berücksichtigt werden und wobei unter Berücksichtigung der Kurvendaten eine Komfortkurvengeschwindigkeit ermittelt wird, wobei eine Sollgeschwindigkeit des Kraftfahrzeugs (1) an einem bestimmten Punkt der Kurve aus der Komfortkurvengeschwindigkeit ermittelt und bei der Regelung der Geschwindigkeit berücksichtigt wird,
**dadurch gekennzeichnet,**
**dass**, wenn die Komfortkurvengeschwindigkeit kleiner als die aktuelle Geschwindigkeit des Kraftfahrzeugs (1) ist, als Sollgeschwindigkeit, wenn die Komfortkurvengeschwindigkeit um weniger als ein vorbestimmter Schwellwert von der aktuellen Geschwindigkeit abweicht, die Komfortkurvengeschwindigkeit gewählt wird und, wenn die Komfortkurvengeschwindigkeit um mehr als ein vorbestimmter Schwellwert von der aktuellen Geschwindigkeit abweicht, die aktuelle Geschwindigkeit abzüglich des vorbestimmten Schwellwerts gewählt wird, oder dass, wenn die Komfortkurvengeschwindigkeit kleiner als die aktuelle Geschwindigkeit des Kraftfahrzeugs (1) ist, als Sollgeschwindigkeit die aktuelle Geschwindigkeit abzüglich eines vorbestimmten prozentualen Anteils des Abstandes zwischen der aktuellen Geschwindigkeit und der Komfortkurvengeschwindigkeit gewählt wird.

2. Verfahren nach Anspruch 1,
**dadurch gekennzeichnet,**
**dass** die Kurvendaten aus Straßenverlaufsdaten einer Navigationseinrichtung (4) und/oder aus von wenigstens einem vorausschauenden Umfeldsensor ermittelten Umfelddaten ermittelt werden.

3. Verfahren nach Anspruch 1 oder 2,
**dadurch gekennzeichnet,**
**dass** die Auswertung der Kurvendaten Teil eines eine Beschleunigungsempfehlung ausgebenden Berechnungsmoduls ist und noch wenigstens ein weiteres Berechnungsmodul, insbesondere ein eine Beschleunigungsempfehlung im Hinblick auf eine fahrerseitig wählbare Wunschgeschwindigkeit ausgebendes Berechnungsmodul und/oder ein eine Beschleunigungsempfehlung im Hinblick auf die Aufrechterhaltung einer Zeitlücke zu einem voranfahrenden Fahrzeug ausgebendes Berechnungsmodul, vorgesehen ist, wobei eine zur Ansteuerung des Kraftfahrzeugs zu verwendende Beschleunigungsanforderung mittels einer Priorisierung aus den Beschleunigungsempfehlungen ermittelt wird, wobei insbesondere die minimale Beschleunigungsanforderung ausgewählt wird.

4. Verfahren nach einem der vorangehenden Ansprüche,
**dadurch gekennzeichnet,**
**dass** die Komfortkurvengeschwindigkeit aus einer maximalen und/oder an einer definierten Stelle einer Kurve vorliegenden Krümmung der Kurve und einer vordefinierten Komfortquerbeschleunigung ermittelt wird.

5. Verfahren nach einem der vorangehenden Ansprüche,
**dadurch gekennzeichnet,**
**dass** die Sollgeschwindigkeit an dem ersten die zur Ermittlung der Komfortkurvengeschwindigkeit genutzte Krümmung aufweisenden Punkt der Kurve aus der Komfortkurvengeschwindigkeit ermittelt wird.

6. Verfahren nach einem der vorangehenden Ansprüche,
**dadurch gekennzeichnet,**
**dass** ein Verzögerungsverlauf sowie ein Zeitpunkt zum Beginn dieses Verzögerungsverlaufs ermittelt und in einer zu dem Zeitpunkt beginnenden Abbremsphase (20) der Verzögerungsverlauf angewandt wird, um das Kraftfahrzeug (1) auf die Sollgeschwindigkeit abzubremsen, wobei eine vordefinierte maximal erlaubte Verzögerung vorgesehen ist.

7. Verfahren nach Anspruch 6,
**dadurch gekennzeichnet,**
**dass** die Verzögerung linear bis auf die maximal erlaubte Verzögerung erhöht wird, wobei wenigstens zwei unterschiedliche, durch ein durch Wirkung der Motorbremse definiertes Plateau getrennte Steigungen vorgesehen sind, und/oder bei der Berechnung des Zeitpunkts zum Beginn des Verzögerungsverlaufs eine Toleranzzeit berücksichtigt wird.

8. Verfahren nach Anspruch 6 oder 7,
**dadurch gekennzeichnet,**
**dass** der Verzögerungsverlauf um eine Beschleunigungsabbauphase (18) und/oder eine Beschleunigungsbegrenzungsphase (19), insbesondere jeweils von vorbestimmter Dauer, ergänzt wird, wobei in der Beschleunigungsabbauphase (18) eine maximal mögliche Beschleunigungsanforderung (17) des Fahrerassistenzsystems (2) insbesondere linear auf eine insbesondere vordefinierte Zwischenbeschleunigung (22) erniedrigt wird und in der Beschleunigungsbegrenzungsphase (19) konstant die Zwischenbeschleunigung (22) angesetzt wird, welche zum Beginn der Abbremsphase (20) insbesondere linear auf Null erniedrigt wird.

9. Verfahren nach einem der vorangehenden Ansprüche,
**dadurch gekennzeichnet,**
**dass** die Sollgeschwindigkeit dem Fahrer zur Anzeige gebracht wird.

10. Verfahren nach einem der vorangehenden Ansprüche,
**dadurch gekennzeichnet,**
**dass** immer dann, wenn eine Regelung der Geschwindigkeit des Kraftfahrzeugs (1) aufgrund von Kurvendaten erfolgt, dies einem Fahrer zur Anzeige gebracht wird, insbesondere durch Hinterleuchtung eines Symbols (26, 27, 28, 29).

11. Kraftfahrzeug (1), umfassend ein längsführendes Fahrerassistenzsystem (2) mit einer Steuereinrichtung (3), die zur Durchführung eines Verfahrens nach einem der vorangehenden Ansprüche ausgebildet ist.

## Claims

1. Method for operating a longitudinally-guiding driver assistance system (2) of a motor vehicle (1), wherein the speed of the motor vehicle (1) is regulated as a function of at least one regulating data item, wherein, as additional regulating data, bend data in relation to at least one bend to be passed by the motor vehicle (1) as the next bend are taken into account during the regulation process and wherein a comfort bend speed is determined taking into account the bend data, wherein a target speed of the motor vehicle (1) is determined from the comfort bend speed at a certain point of the bend and is taken into account when regulating the speed,
**characterised in that**
when the comfort bend speed is less than the current speed of the motor vehicle (1), the comfort bend speed is selected as the target speed when the comfort bend speed differs from the current speed by less than a predetermined threshold value, and when the comfort bend speed differs from the current speed by more than a predetermined threshold value, the current speed minus the predetermined threshold value is selected or **in that** when the comfort bend speed is less than the current speed of the motor vehicle (1), the current speed minus a predetermined percentage proportion of the gap between the current speed and the comfort bend speed is selected as the target speed.

2. Method according to claim 1,
**characterised in that**
the bend data are determined from street course data of a navigation device (4) and/or from environmental data determined from at least one forward-looking environmental sensor.

3. Method according to claim 1 or 2,
**characterised in that**
the evaluation of the bend data is part of a calculation module outputting an acceleration recommendation and at least one further calculation module is still provided, in particular a calculation module outputting an acceleration recommendation with regard to a desired speed selectable by the driver and/or a calculation module outputting an acceleration recommendation with regard to maintaining a time gap to a vehicle in front is provided, wherein an acceleration requirement to be used for actuating the motor vehicle is determined from the acceleration recommendations by means of prioritisation, wherein the minimal acceleration requirement is in particular selected.

4. Method according to any one of the preceding claims,
**characterised in that**
the comfort bend speed is determined from a maximum curvature of the bend and/or from a curvature of the bend present at a defined point of a bend and a predefined comfort lateral acceleration.

5. Method according to any one of the preceding claims,
**characterised in that**
the target speed is determined from the comfort bend data at the first point of the bend comprising the curvature used to determine the comfort bend speed.

6. Method according to any one of the preceding claims,
**characterised in that**
a deceleration course and a time at the beginning of this deceleration course is determined and is applied in a braking phase (20) of the deceleration course beginning at the time in order to brake the motor vehicle (1) to the target speed, wherein a predefined maximally permitted deceleration is provided.

7. Method according to claim 6,
**characterised in that**
the deceleration is increased linearly to the maximally permitted deceleration, wherein at least two different increases separated by a plateau defined by effect of the motor brakes are provided and/or a tolerance time is taken into account when calculating the time at the beginning of the deceleration course.

8. Method according to claim 6 or 7,
**characterised in that**
the deceleration course is supplemented by an acceleration decrease phase (18) and/or an acceleration limit phase (19), in particular of a predetermined duration, wherein a maximally possible acceleration requirement (17) of the driver assistance system (2) is, in particular, lowered to an, in particular, predefined intermediate acceleration (22) in the acceleration decrease phase (18) and the intermediate acceleration (22) is set constantly in the acceleration limit phase (19) which is lowered in particular linearly to zero at the beginning of the braking phase (20).

9. Method according to any one of the preceding claims,
**characterised in that**
the target speed is displayed to the driver.

10. Method according to any one of the preceding claims,
**characterised in that**
whenever a regulation of the speed of the motor vehicle (1) takes place owing to bend data, this is displayed to a driver, in particular by backlighting a symbol (26, 27, 28, 29).

11. Motor vehicle (1), comprising a longitudinally-guiding driver assistance system (2) with a control device (3), which is designed to carry out a method according to any one of the preceding claims.

## Revendications

1. Procédé de fonctionnement d'un système d'assistance au conducteur avec guidage longitudinal (2) d'un véhicule automobile (1),
dans lequel la vitesse du véhicule automobile (1) est réglée en fonction d'au moins une donnée de réglage,
dans lequel des données de courbe concernant au moins la prochaine courbe à parcourir par le véhicule automobile (1) sont prises en compte comme autres données de réglage lors du réglage,
dans lequel une vitesse en courbe de confort est déterminée en tenant compte des données de courbe,
dans lequel une vitesse de consigne du véhicule automobile (1) est déterminée au niveau d'un point déterminé de la courbe à partir de la vitesse en courbe de confort et est prise en compte lors du réglage de la vitesse,
**caractérisé en ce que**, lorsque la vitesse en courbe de confort est plus petite que la vitesse actuelle du véhicule automobile (1), on choisit comme vitesse de consigne, lorsque la vitesse en courbe de confort s'écarte de moins d'une valeur de seuil prédéterminée de la vitesse actuelle, la vitesse en courbe de confort et, lorsque la vitesse en courbe de confort s'écarte de plus d'une valeur de seuil prédéterminée de la vitesse actuelle, la vitesse actuelle moins la valeur de seuil prédéterminée,
ou **en ce que**, lorsque la vitesse en courbe de confort est plus petite que la vitesse actuelle du véhicule automobile (1), on choisit comme vitesse de consigne la vitesse actuelle moins un pourcentage prédéterminé de l'écart entre la vitesse actuelle et la vitesse en courbe de confort.

2. Procédé selon la revendication 1, **caractérisé en ce que** les données de courbe sont déterminées à partir de données de tracé de route d'un dispositif de navigation (4) et/ou à partir de données d'environnement déterminées par au moins un capteur d'environnement anticipant.

3. Procédé selon la revendication 1 ou 2,
**caractérisé en ce que** l'évaluation des données de courbe fait partie d'un module de calcul délivrant une recommandation d'accélération et **en ce qu'**il est prévu encore au moins un autre module de calcul, en particulier un module de calcul délivrant une recommandation d'accélération en vue d'une vitesse souhaitée pouvant être choisie par le conducteur et/ou un module de calcul délivrant une recommandation d'accélération en vue du respect d'un écart temporel par rapport à un véhicule précédent,
dans lequel une demande d'accélération à utiliser pour la commande du véhicule automobile est déterminée au moyen d'une prioritisation à partir des recommandations d'accélération, la demande d'accélération minimale étant en particulier sélectionnée.

4. Procédé selon l'une quelconque des revendications précédentes, **caractérisé en ce que** la vitesse en courbe de confort est déterminée à partir d'une courbure maximale de la courbe et/ou d'une courbure existant à un point défini de la courbe et à partir d'une accélération transversale de confort prédéfinie.

5. Procédé selon l'une quelconque des revendications précédentes, **caractérisé en ce que** la vitesse de consigne est déterminée à partir de la vitesse en courbe de confort au premier point, présentant la courbure utilisée pour la détermination de la vitesse en courbe de confort, de la courbe.

6. Procédé selon l'une quelconque des revendications précédentes, **caractérisé en ce qu'**une courbe de retardement ainsi qu'un instant pour le début de cette courbe de retardement sont déterminés et la courbe de retardement est utilisée dans une phase de freinage (20) commençant audit instant afin de freiner le véhicule automobile (1) à la vitesse de consigne, un retard maximal autorisé prédéfini étant prévu.

7. Procédé selon la revendication 6, **caractérisé en ce que** le retard est augmenté de façon linéaire jusqu'au retard maximal autorisé, au moins deux pentes différentes séparées par un plateau défini par l'action du frein moteur étant prévues et/ou un temps de tolérance étant pris en compte lors du calcul de l'instant pour le début de la courbe de retardement.

8. Procédé selon la revendication 6 ou 7, **caractérisé en ce que** la courbe de retardement est complétée par une phase de décélération (18) et/ou par une phase de limitation d'accélération (19), en particulier à chaque fois d'une durée prédéterminée, une demande d'accélération maximale possible (17) du système d'assistance au conducteur (2) étant réduite en particulier de façon linéaire dans la phase de décélération (18) jusqu'à une accélération intermédiaire (22) notamment prédéfinie et l'accélération intermédiaire (22) qui est réduite en particulier de façon linéaire à zéro au début de la phase de freinage (20) étant maintenue constante dans la phase de limitation d'accélération (19).

9. Procédé selon l'une quelconque des revendications précédentes, **caractérisé en ce que** la vitesse de consigne est affichée pour le conducteur.

10. Procédé selon l'une quelconque des revendications précédentes, **caractérisé en ce que**, à chaque fois qu'un réglage de la vitesse du véhicule automobile (1) s'effectue en raison de données de courbe, ce fait est affiché pour le conducteur, en particulier par rétroéclairage d'un symbole (26, 27, 28, 29).

11. Véhicule automobile (1), comprenant un système d'assistance au conducteur avec guidage longitudinal (2) avec un dispositif de commande (3) qui est conçu pour la mise en oeuvre d'un procédé selon l'une quelconque des revendications précédentes.
